(19) Europäisches Patentamt

European Patent Office

Office européen des brevets

(11) **EP 1 956 466 B1**

(12) **FASCICULE DE BREVET EUROPEEN**

(45) Date de publication et mention
de la délivrance du brevet:
**07.08.2013 Bulletin 2013/32**

(51) Int Cl.:
***G06F 3/01*** *(2006.01)*

(21) Numéro de dépôt: **07370003.1**

(22) Date de dépôt: **12.02.2007**

(54) **Interface tactile vibrante**

Vibrierende haptische Schnittstelle

Vibrating tactile interface

(84) Etats contractants désignés:
**DE FR GB**

(43) Date de publication de la demande:
**13.08.2008 Bulletin 2008/33**

(73) Titulaire: **UNIVERSITE DES SCIENCES ET
TECHNOLOGIES DE LILLE
59655 Villeneuve-d'Ascq Cedex (FR)**

(72) Inventeurs:
• **Biet, Mélisandre
37370 Saint Paterne Racan (FR)**
• **Giraud, Frédéric
59700 Marcq en Baroeul (FR)**
• **Lemaire Semail, Betty
59800 Lille (FR)**

(74) Mandataire: **Matkowska, Franck
Matkowska & Associés
9, rue Jacques Prévert
59650 Villeneuve d'Ascq (FR)**

(56) Documents cités:
**JP-A- 2001 255 993 US-A- 5 389 849**

• **M. BIET, F. GIRAUD, F. MARTINOT, B. SEMAIL:
"A Piezoelectric Tactile Display Using Travelling
Lamb Wave" PROCEEDINGS OF EUROHAPTICS
2006, 5 juillet 2006 (2006-07-05), pages 567-570,
XP002438180 Paris, France**
• **WATANABE T ET AL: "A METHOD FOR
CONTROLLING TACTILE SENSATION OF
SURFACE ROUGHNESS USING ULTRASONIC
VIBRATION" PROCEEDINGS OF THE
INTERNATIONAL CONFERENCE ON ROBOTICS
AND AUTOMATION. NAGOYA,JAPAN, MAY 21 -
27, 1995, NEW YORK, IEEE, US, vol. VOL. 1, 21
mai 1995 (1995-05-21), pages 1134-1139,
XP000657310 ISBN: 0-7803-1966-4**
• **TAKASAKI M ET AL: "Control parameters for an
active type SAW tactile display" INTELLIGENT
ROBOTS AND SYSTEMS, 2004. (IROS 2004).
PROCEEDINGS. 2004 IEEE/RSJ
INTERNATIONAL CONFERENCE ON SENDAI,
JAPAN 28 SEPT.-2 OCT., 2004, PISCATAWAY, NJ,
USA,IEEE, vol. 4, 28 septembre 2004 (2004-09-28),
pages 4044-4049, XP010766321 ISBN:
0-7803-8463-6**

**Description**

Domaine Technique

La présente invention concerne une nouvelle interface tactile, qui met en oeuvre une surface vibrante, de préférence ultrasonore, et permettant d'obtenir un effet « squeeze film ». Cette interface permet de reproduire tactilement des textures ou rugosités très fines, en modulant l'effet « squeeze film ».

Art Antérieur

Pour reproduire de manière dynamique des textures ou rugosités très fines et détectables au toucher, il est connu à ce jour de réaliser des interfaces tactiles comportant une surface de contact vibrante, et des moyens de mise en vibration permettant de générer dans cette surface de contact des vibrations mécaniques ultrasonores d'amplitudes très faibles.

Les vibrations mécaniques de la surface de contact de ce type d'interfaces tactiles ultrasonores sont obtenues en générant selon le cas des ondes de surface dites de Rayleigh ou des ondes de Lamb.

Transducteurs à ondes de Rayleigh ou ondes de surface (SAW)

A la surface d'un milieu isotrope semi-infini, une onde de surface, dite de Rayleigh, à deux composantes peut se propager. Les composantes longitudinale et transversale, contenues dans le plan sagittal (défini par la normale à la surface et le vecteur d'onde), sont déphasées de $\pi/2$. Les amplitudes de ces composantes décroissent différemment avec la profondeur. Le passage de l'onde provoque une ondulation de la surface qui se fait sentir jusqu'à une faible profondeur, de l'ordre de la longueur d'onde $\lambda$ .

Une interface tactile ultrasonore mettant en oeuvre un transducteur à ondes de surface de Rayleigh [encore désignées ondes de «SAW » (« Surface Acoustic Wave »)] est par exemple décrite dans la publication suivante : Masaya Takasaki et al, «Two-dimensial Active Surface Acoustic Wave Tactile Display On a Computer Screen », Symposium on Haptic Interfaces for Virtual Environment and Teleoperator Systems 2006, March 25-26,IEEE, page 49-54.

Ce transducteur comporte des électrodes en forme de peigne (doigts interdigités IDT) déposées sur un cristal piézo-électrique poli , en l'occurrence un substrat rectangulaire de très faible épaisseur en Niobate de Lithium (LiNbO$_3$) obtenu par synthèse de Czochralsky. Un signal électrique est appliqué sur les électrodes en forme de peigne (IDT), en sorte de générer, à la surface du substrat, des ondes de SAW (ou Rayleigh) stationnaires. L'utilisation du Niobate de Lithium (LiNbO$_3$) limite la gamme de fréquence utile pour le fonctionnement de l'actionneur autour de 10MHz.

Les interfaces tactiles à ondes de SAW présentent plusieurs inconvénients. Le substrat qui forme la surface de contact vibrante doit présenter une épaisseur faible, ce qui le rend très fragile. La surface du substrat s'échauffe rapidement, et les amplitudes de vibration obtenues en surface du substrat sont extrêmement faibles et typiquement de l'ordre du nanomètre. Tel que cela est enseigné dans la publication précitée, on est ainsi conduit à utiliser ce type de transducteur, non pas directement en le touchant avec le bout du doigt, mais en interposant entre le doigt et la surface vibrante du substrat, un patin intermédiaire. Ce patin d'une part permet d'amplifier les vibrations mécaniques de la surface du substrat, et d'autre part sert d'isolant thermique entre le doigt et le substrat vibrant.

Transducteurs à ondes de Lamb

Lorsqu'un solide est limité par deux plans parallèles, les ondes de Rayleigh se propagent indépendamment sur chacun des plans tant que leur distance (épaisseur de la plaque) est grande devant la longueur d'onde. Quand l'épaisseur de la plaque devient de l'ordre de la longueur $\lambda$, les composantes des ondes de surface se couplent et donnent naissance à des ondes de Lamb symétriques ou antisymétriques, aboutissant à une déformation mécanique du solide dans toute son épaisseur.

Les interfaces tactiles ultrasonores utilisant les ondes de Lamb présentent l'avantage de pouvoir générer des vibrations d'amplitudes nettement supérieures à celles obtenues avec des interfaces tactiles ultrasonores à ondes de SAW et typiquement de l'ordre de quelques micromètres. Cette gamme d'amplitude permet d'obtenir un effet de lubrification connu et communément désigné effet « Squeeze film ».

Pour une compréhension de l'effet « Squeeze film », on peut se référer par exemple à la publication suivante : M. Wiesendanger « Squeeze film air bearings using piezoelectric bending elements », PhD Dissertation, EPFL, Suisse, 2000

Une première solution d'interface tactile utilisant l'effet « Squeeze film » est décrite dans la publication suivante : T. Watanabe, S. A. Fukui. "A Method for Controlling Tactile Sensation of Surface Roughness Using Ultrasonic Vibration" , IEEE Conference on robotics and automation, pp. 1134-1139, 1995.

Cette interface tactile comporte une poutre rectangulaire de faible épaisseur et des moyens de mise en vibration ultrasonores qui sont couplés à la poutre, et qui sont adaptés pour créer dans la poutre une onde vibratoire stationnaire en sorte de déformer ladite poutre et obtenir à la surface supérieure de cette poutre un effet « Squeeze film ». La texture fine en surface de ladite poutre est ressentie en positionnant un doigt directement au contact de cette surface, sans exercer de pression trop importante afin de ne pas supprimer l'effet de sustentation du doigt découlant de l'effet « Squeeze film », et en déplaçant le doigt dans la direction longitudinale de la poutre. Ces moyens de mise en vibration ultrasonores sont plus particulièrement constitués par des vibrateurs de type Langevin, ayant par exemple une fréquence de résonance de 77 kHz, et positionnés à deux extrémités opposées de la poutre. Ces vibrateurs de type Langevin permettent d'appliquer aux deux extrémités de la poutre des excitations mécaniques perpendiculaires à la plaque.

Ce type d'interface tactile présente l'inconvénient d'être très encombrante, ce qui la rend inadaptée à une exploitation industrielle et commerciale, et limite son utilisation pour l'étude expérimentale en laboratoire de l'effet « Squeeze film ». En outre, avec ce type d'interface, les textures fines peuvent être ressenties par déplacement du doigt au contact de la plaque dans une direction unique, ce qui limite les possibilités d'utilisation de cette interface.

Une autre solution d'interface tactile utilisant l'effet « Squeeze film » est décrite dans la publication suivante : Melisande Biet, Frédéric Giraud, François Martinot, Betty Semail, « A Piezoelectric Display Using Travelling Lamb Wave », Proceedings of Eurohaptics, pp 567-570, juillet 2006.

Dans cette publication, l'interface tactile met en oeuvre le stator annulaire d'un moteur rotatif de type Shinsei USR60. Ce stator annulaire est excité par des céramiques piézoélectriques, qui permettent de générer dans la structure annulaire du stator des ondes de Lamb qui sont progressives (non stationnaires).

Cette solution permet de générer un effet « Squeeze film » à la surface annulaire du stator. Cependant, d'une part ce type d'interface présente un encombrement important ; d'autre part la dimension de la surface de contact dans la direction perpendiculaire à la direction de propagation de l'onde (la largeur de l'anneau) est nécessairement faible, ce qui limite de manière préjudiciable la surface exploratoire pour le doigt de l'utilisateur. En outre, dans la solution décrite dans cette publication, on utilise uniquement des ondes de Lamb progressives se propageant dans une direction unique (selon la circonférence de l'anneau), et il n'est pas possible notamment de générer des ondes dans une autre direction, notamment la direction radiale de l'anneau. Ce type d'interface tactile est de ce fait uniquement à une dimension.

## Objectif de l'invention

La présente invention vise à proposer une nouvelle interface tactile :

- qui pallie les inconvénients précités inhérents aux interfaces à ondes de SAW, en ce qu'elle est robuste mécaniquement, et peut être utilisée par contact digital direct sans provoquer notamment d'échauffement du doigt,
- qui présente un très faible encombrement, et qui est plus simple à fabriquer, comparativement aux interfaces précitées de l'art antérieur utilisant des ondes de Lamb,
- et qui peut le cas échéant avantageusement présenter une surface exploratoire vibrante pour le doigt de l'utilisateur plus importante que celle des interfaces précitées de l'art antérieur utilisant des ondes de Lamb.

## Résumé de l'invention

L'objectif précité est atteint au moyen de l'interface tactile de la revendication 1.

Plus particulièrement, dans l'interface de l'invention, les ondes de Lamb stationnaires qui sont générées dans la structure (plaque/couche piézoélectrique) permettent d'engendrer un effet « Squeeze film », grâce notamment à une amplitude crête à crête suffisamment importante de la déformée de la plaque.

Plus particulièrement, l'interface tactile de l'invention comporte les caractéristiques techniques additionnelles et facultatives mentionnées dans les revendications dépendantes 2 à 15.

## Brève description des dessins

D'autres caractéristiques et avantages de l'invention apparaîtront plus clairement à la lecture de la description détaillée d'une variante préférée de réalisation d'une interface tactile de l'invention, laquelle description détaillée est donnée à titre d'exemple non limitatif et non exhaustif, et en référence aux dessins annexés sur lesquels :

- la figure 1 est une vue de coté (dans le plan Y,Z) d'un exemple préféré de réalisation d'une interface tactile de l'invention,
- la figure 2 est une vue de dessous de l'interface de la figure 1,
- la figure 3 est un schéma d'une première variante de polarisation et d'alimentation électrique des céramiques piézoélectriques de l'interface des figures 1 et 2,
- la figure 4 est un schéma d'une deuxième variante de polarisation et d'alimentation électrique des céramiques piézoélectriques de l'interface des figures 1 et 2,
- la figure 5 est une représentation en 3 dimensions de la déformée de la structure vibrante (plaque/couche piézoélectrique) de l'interface des figures 1 et 2, suivant l'axe de propagation longitudinal Y, ladite représentation étant issue d'une analyse modale et étant obtenue par calcul numérique,
- la figure 6 est une représentation d'un exemple de déformée réelle de la surface de contact de la plaque de l'interface des figures 1 et 2, suivant l'axe de propagation longitudinal Y,
- la figure 7 est une représentation d'un exemple de déformée réelle de la surface de contact de la plaque de l'interface des figures 1 et 2, suivant l'axe de propagation transversal X,

- la figure 8 est un schéma bloc illustrant la commande de l'interface des figures 1 et 2, avec une modulation d'amplitude de la vibration de la surface de contact en fonction du déplacement du doigt d'un utilisateur au contact de cette surface.

Description détaillée

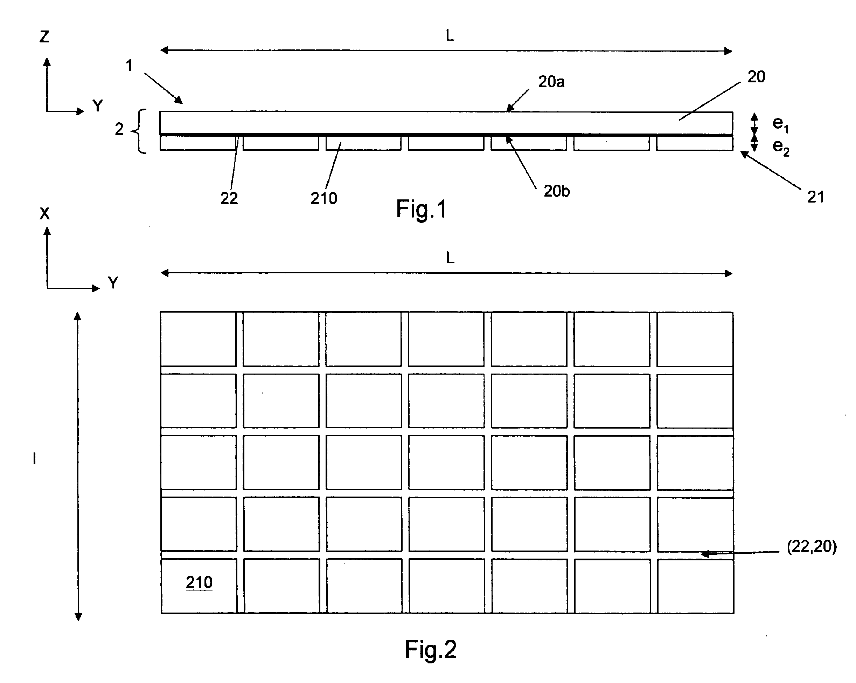

On a représenté sur les figures 1 et 2 un exemple préféré de réalisation d'une interface tactile 1 de l'invention.

Cette interface tactile 1 comporte une structure vibrante 2 constituée par un substrat résonateur 20, et une couche piézoélectrique excitatrice 21, qui est fixée au substrat 20 par une fine couche de colle 22.

Le substrat 20 est plus particulièrement constitué par une plaque rectangulaire d'épaisseur $(e_1)$, de largeur (l), de longueur (L). Cette plaque 20 comporte une face supérieure 20a lisse, et une face inférieure 20b. La face supérieure 20a forme une surface de contact vibrante, destinée à être en contact avec le doigt d'un utilisateur de l'interface.

La couche piézoélectrique 21 présente une épaisseur $(e_2)$, et est dans l'exemple particulier illustré, constituée par une matrice de céramiques piézoélectriques 210, qui sont collées contre la face inférieure 20b de la plaque 20. La matrice de céramiques 210 couvre toute la surface de la plaque 20, et les céramiques 210 sont alignées selon la largeur (l) et selon la longueur (L) de la plaque 20.

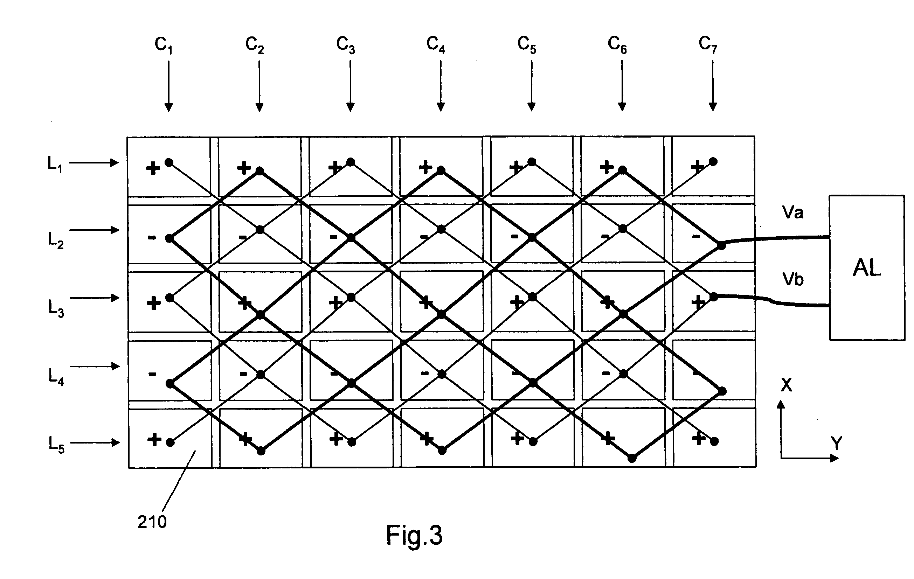

On à représenté sur la figure 3, un exemple de polarisation des céramiques piézoélectriques 210. Sur cette figure, ces polarisations sont symbolisées par les signes « + » et « - ». Les céramiques piézoélectriques 210 appartenant à une même ligne $L_i$ de céramiques ( figure 3/ lignes $L_1$ à $L_5$) qui s'étend suivant la longueur (L) de l'interface présentent la même polarisation (négative ou positive). Les céramiques piézoélectriques 210 appartenant à une même colonne $C_i$ de céramiques (figure 3/ colonne $C_1$ à $C_7$) qui s'étend suivant la largeur (l) de l'interface présentent des polarisations alternativement négatives et positives.

Dans la suite de la description, on désigne $CE_{i,j}$ la céramique 210 appartenant à la ligne $L_i$ et la colonne $C_j$.

En référence à la figure 3, les céramiques piézoélectriques 210 sont alimentées électriquement par deux signaux électriques $V_a$ et $V_b$ délivrés par une source d'alimentation (AL). Dans l'exemple de réalisation de la figure 3, les céramiques suivantes sont alimentées par un même premier signal électrique $V_a$ :

$CE_{1,2}$; $CE_{1,4}$; $CE_{1,6}$
$CE_{2,1}$; $CE_{2,3}$; $CE_{2,5}$ ; $CE_{2,7}$
$CE_{3,2}$ ; $CE_{3,4}$; $CE_{3,6}$
$CE_{4,1}$; $CE_{4,3}$; $CE_{4,5}$; $CE_{4,7}$
$CE_{5,2}$; $CE_{5,4}$; $CE_{5,6}$

En référence à la figure 3, les autres céramiques sont alimentées par un même second signal électrique $V_b$ :

$CE_{1,1}$ ; $CE_{1,3}$; $CE_{1,5}$; $CE_{1,7}$
$CE_{2,2}$; $CE_{2,4}$; $CE_{2,6}$
$CE_{3,1}$ ; $CE_{3,3}$; $CE_{3,5}$; $CE_{3,7}$
$CE_{4,2}$; $CE_{4,4}$; $CE_{4,6}$
$CE_{5,1}$; $CE_{5,3}$; $CE_{5,5}$; $CE_{5,7}$.

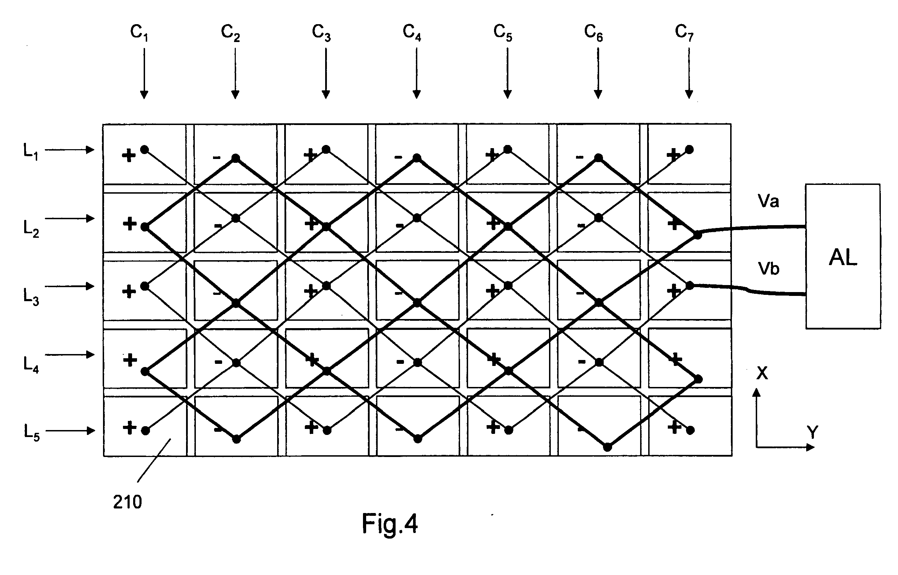

On a représenté sur la figure 4, une autre variante de polarisation et d'alimentation électrique des céramiques 210.

Les deux signaux électriques $V_a$ et $V_b$ alimentant les céramiques piézoélectriques sont des tensions sinusoïdales. Lorsqu'une céramique piézoélectrique 210 est alimentée par une tension sinusoïdale, elle se contracte et se dilate alternativement dans un plan parallèle à sa surface.

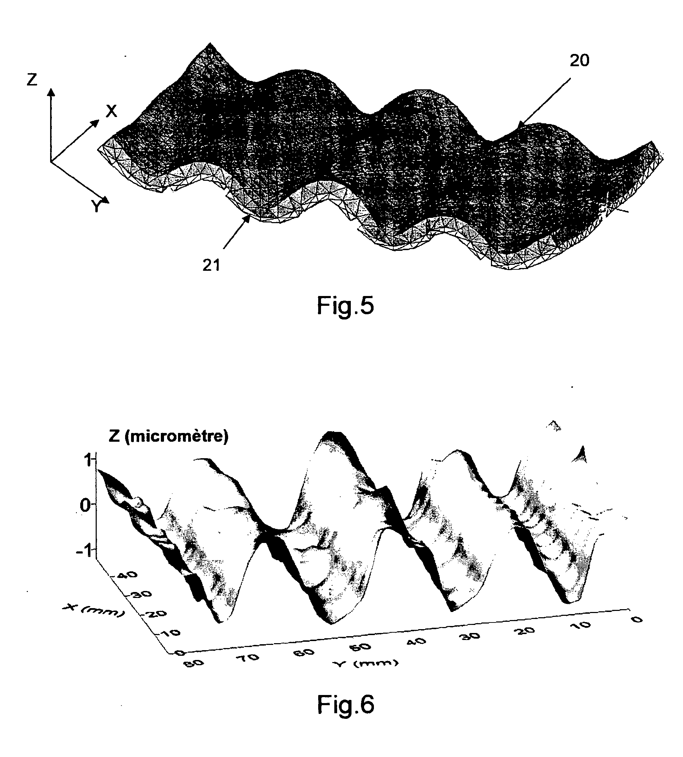

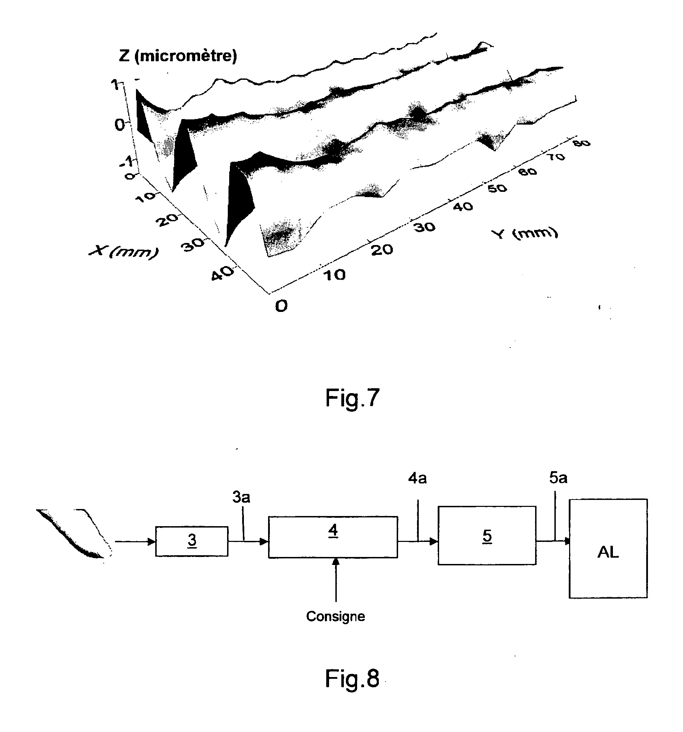

Lorsque les deux signaux électriques $V_a$ et $V_b$ alimentant les céramiques piézoélectriques sont des tensions sinusoïdales en opposition de phase [$V_a$ = V1.sin(wt) et $V_b$= V1.sin(wt-$\pi$)], on excite un mode propre de flexion de la structure vibrante 2 (plaque 20 / colle 22 / couche 21 de céramiques piézoélectrique 210) dans le sens de la longueur (L) de la structure pour la variante de la figure 3 et dans le sens de la largeur (l) de la structure pour la variante de la figure 4. On génère ainsi dans la structure vibrante 2 des ondes de Lamb stationnaires ayant une direction de propagation suivant un axe rectiligne, dit axe de propagation. Dans la variante de polarisation des céramiques de la figure 3, les ondes de Lamb stationnaires ont une direction de propagation suivant l'axe Y correspondant à la longueur (L) de la plaque 20, et on obtient une déformée de toute la structure 2 suivant l'axe Z, perpendiculaire à la surface de contact 20a (figure 6). Ce mode propre de flexion est caractérisé par une fréquence de résonance $f_Y$. A l'inverse, dans la variante de polarisation des céramiques de la figure 4, les ondes de Lamb stationnaires ont une direction de propagation suivant l'axe X correspondant à la largeur (l) de la plaque 20, et on obtient une déformée de toute la structure 2 suivant l'axe Z, perpendiculaire à la surface de contact 20a (figure 7). Ce mode propre de flexion est caractérisé par une fréquence de résonance $f_X$.

Lorsque les deux signaux électriques $V_a$ et $V_b$ alimentant les céramiques piézoélectriques sont des tensions sinusoïdales identiques [$V_a$ = $V_b$ = V1.sin(wt)], on excite un autre mode propre de flexion de la structure vibrante 2 (plaque 20 / colle 22 / couche 21 de céramiques piézoélectrique 210) dans le sens de la largeur (l) de la structure pour la variante de la figure 3 et dans le sens de la longueur (L) de la structure pour la variante de la figure 4. On génère ainsi dans la structure vibrante 2 des ondes de Lamb stationnaires ayant une direction de propagation suivant un axe rectiligne, dit axe de propagation. Dans la variante de polarisation des céramiques de la figure 3, les ondes de Lamb stationnaires ont une direction de propagation suivant l'axe X correspondant à la largeur (I) de la plaque 20, et on obtient une déformée de toute la structure 2 suivant l'axe Z, perpendiculaire à la surface de contact 20a (figure 7). Ce mode propre de flexion est caractérisé par une fréquence de résonance $f_x$. A l'inverse, dans la variante de polarisation des céramiques de la figure 4, les ondes de Lamb stationnaires ont une direction de propagation suivant l'axe Y correspondant à la longueur (L) de la plaque 20, et on obtient une déformée de toute la structure 2 suivant l'axe Z, perpendiculaire à la surface de contact 20a (figure 6). Ce mode propre de flexion est caractérisé par une fréquence de résonance fy.

La longueur d'onde ($\lambda$) de ces ondes de Lamb stationnaires est supérieure à l'épaisseur (e1+e2) de la structure vibrante 2.

Exemple de réalisation

Dans un exemple précis de réalisation, donné à titre indicatif uniquement, le substrat résonateur 20 était une plaque de Cuivre Béryllium, d'épaisseur ($e_1$) égale à 2mm, de longueur L égale à 83mm et de largeur (I) égale à 49mm. Chaque céramique piézoélectrique 210 était une plaque rectangulaire de 11mm sur 9mm et d'épaisseur ($e_2$) égale à 1mm. Ces céramiques piézoélectriques 210 étaient fixées à la plaque 20 au moyen d'une colle époxy. La fréquence $f_Y$ du mode propre de flexion selon l'axe de propagation Y valait 30,5kHz ; La fréquence $f_X$ du mode propre de flexion selon l'axe de propagation X valait 44,8kHz.

Mode de flexion suivant la longueur L (axe Y) / Figure 6

On a représenté sur la figure 6, un exemple de déformée de la surface de contact 20a de l'interface 1 selon l'axe de propagation longitudinal Y. Cette déformée a été mesurée point par point au moyen d'un vibromètre laser. Pour obtenir cette déformée, les signaux $V_a$ et $V_b$ présentaient les caractéristiques suivantes :

$$V_a = V1.sin(wt) \text{ et } V_b = V1.sin(wt-\pi)$$

Fréquence d'excitation (w/2$\pi$) : 30,5 kHz
Amplitude de la tension d'alimentation (V1) : 15,6 V
Dans ces conditions, le mode de flexion excité suivant la longueur (L) était l'harmonique de rang 8. La longueur d'onde ($\lambda$) de la déformée obtenue valait 20,75mm. L'amplitude (crête à crête) de l'onde sous cette tension d'alimentation valait 2,3 $\mu$m.

Mode de flexion suivant la largeur I (axe X) / Figure 7

On a représenté sur la figure 7, un exemple de déformée de la surface de contact 20a de l'interface 1 selon l'axe de propagation transversal X. Cette déformée a été mesurée point par point au moyen d'un vibromètre laser. Pour obtenir cette déformée, la polarisation des cellules était conforme à la figure 3, et les signaux $V_a$ et $V_b$ présentaient les caractéristiques suivantes :

$$V_a = V_b = V1.sin(wt)$$

Fréquence d'excitation (w/2$\pi$) : 44,8 kHz
Amplitude de la tension d'alimentation (V1) : 6 V
Dans ces conditions, le mode de flexion excité suivant la largeur (I) était le mode de rang 6. La longueur d'onde ($\lambda$) de la déformée obtenue valait 16,33mm. L'amplitude (crête à crête) de l'onde sous cette tension d'alimentation valait 2,4 $\mu$m.

Dans ces conditions de fonctionnement, un utilisateur déplaçant sont doigt au contact de la surface de contact 20a peut ressentir une texture (soit selon l'axe X, soit selon l'axe Y, selon le type de déformée générée), en modulant l'effet « Squeeze film » obtenu.

Effet « Squeeze film »

Dans certaines conditions, la vibration, de préférence ultrasonore, de la surface de contact 20a de l'interface permet de générer une surpression entre le doigt d'un utilisateur et cette surface de contact vibrante 20a, se traduisant par une sorte d'effet de lubrification, communément désigné effet « Squeeze film ».

Plusieurs paramètres influent sur l'obtention de cet effet « Squeeze film ».

D'une manière générale, l'effet « Squeeze film » est conditionné par la valeur du paramètre σ ci-après, communément désigné « squeeze number » et calculé au moyen de la formule suivante :

$$\sigma = (12\mu\omega/Pa).(Ic/h)^2$$

avec :

$\mu$: la viscosité dynamique de l'air à 20°C et 1 bar (1,85 .10^{-5} Pa.s)
$\omega$: la pulsation de la vibration (rad.s^{-1})
Pa : la pression ambiante (10^5 Pascals)

$$h = h_{vib} + he + hr$$

$h_{vib}$ : l'amplitude de la vibration de la surface de contact ($\mu$m)
Ic : longueur au contact du doigt (10^4 $\mu$m)
he : amplitude de l'ondulation des empreintes du doigt (50$\mu$m)
hr : la rugosité de la surface de contact vibrante ($\mu$m)

Pour obtenir l'effet « Squeeze film » et s'affranchir des effets de bord, la valeur de ce paramètre σ doit être supérieure ou égale à 10. Cette condition sur le « squeeze number » permet de déterminer la fréquence minimale pour s'affranchir des effets de bord. Une fois cette condition sur le « squeeze number » remplie, on peut déterminer la valeur de la surpression entre le doigt et la plaque vibrante. Les résultats de ce calcul montrent que l'effet « squeeze film » augmente notamment avec l'amplitude de vibration et diminue avec la rugosité de la surface de contact (plus la surface est rugueuse et moins l'effet « Squeeze film » peut être obtenu).

Les conditions de fonctionnement de l'interface tactile 1, données précédemment dans le cadre de l'exemple précis de réalisation, permettent de générer un effet « Squeeze film », avec un paramètre σ supérieur à 10.

Plus généralement, avec ce type d'interface tactile, on peut considérer que pour obtenir un effet « Squeeze film », il est préférable que l'amplitude de vibration crête à crête de la surface de contact 20a soit supérieure ou égale à 0,2 $\mu$m, et plus préférentiellement encore supérieure ou égale à 1$\mu$m. La fréquence de résonance ($f_X$ ou $f_Y$) du mode propre de flexion excité est de préférence, mais non nécessairement, comprise entre 10kHz et 100kHz, et de préférence entre 20kHz et 100kHz.

Simulation de textures - modulation de l'effet « Squeeze film »

En agissant par exemple sur l'amplitude (V1) des tensions d'alimentations (signaux $V_a$ et $V_b$), ou sur la fréquence des signaux d'alimentation $V_a$ et $V_b$ d'excitation (autour de la fréquence de résonance du mode de flexion) ou sur le déphasage des signaux d'alimentation $V_a$ et $V_b$, on peut modifier l'amplitude crête à crête des vibrations de la surface 20a, et faire ressentir à l'utilisateur des textures différentes.

Pour simuler des textures différentes pour un utilisateur au moyen de l'interface 1 de l'invention, on réalise de préférence une commande des moyens d'alimentation électrique (AL), qui permet de réaliser automatiquement une modulation de l'amplitude de vibration en fonction du déplacement du doigt de l'utilisateur (par exemple position, vitesse ou accélération du doigt) au contact de la surface vibrante 20a de l'interface.

Dans ce cas, et en référence à la figure 8 illustrant ces moyens de commande, on mesure au moyen d'un capteur 3 de déplacement du doigt de l'utilisateur au contact de la surface 20a de l'interface 1 (par exemple capteur de position du doigt, capteur de vitesse de déplacement du doigt, capteur d'accélération du doigt). Le signal de mesure 3a délivré par ce capteur est traité par un module 4 réalisant une transformation spatio-temporelle de ce signal en fonction d'une référence de consigne (par exemple la période spatiale de la texture que l'on souhaite simuler). Le signal 4a délivré par ce bloc de traitement 4 est traité en temps réel par un module 5 de calcul de la modulation d'amplitude. Ce module de calcul 5 délivre, pour les moyens d'alimentation électrique (AL), un signal de consigne 5a, qui est utilisé pour ajuster automatiquement l'un des paramètres suivants des signaux d'alimentation électrique ($V_a$, $V_b$) : la fréquence, la phase ou l'amplitude de la tension, ce qui permet de moduler l'effet « Squeeze film » et/ou l'orientation de la texture (effet tactile de crantage en X, en Y ou dans une direction intermédiaire).

Ainsi, l'interface tactile 2D des figures annexées permet avantageusement de simuler pour un utilisateur des textures ou rugosités fines sur une surface exploratoire importante (surface de contact 20a de la plaque vibrante 20) et dans toutes les directions de déplacement du doigt à la surface de la plaque vibrante. Des textures ou rugosités peuvent être ressenties tactilement par l'utilisateur de l'interface en déplaçant librement son doigt, et selon un mouvement quelconque, sur la surface de contact 20a de la plaque.

L'invention n'est pas limitée aux exemples particuliers de réalisation qui viennent d'être décrits en référence aux figures annexées, mais s'étend à toute interface tactile définie dans les revendications annexées.

En particulier, et de manière non exhaustive, la plaque 20 n'est pas nécessairement rectangulaire, mais peut avoir une toute autre géométrie, l'important étant que la structure vibrante 2 (plaque/couche piézoélectrique) possède au moins un mode de flexion suivant un axe de propagation rectiligne (X ou Y), apte à être excité à l'aide des moyens d'alimentation électrique AL, et que l'excitation de ce mode propre de flexion permette de générer dans la structure vibrante (plaque/couche piézoélectrique) des ondes de Lamb stationnaires ayant une direction de propagation suivant cet axe de propagation.

De préférence, mais non nécessairement, la structure vibrante 2 comporte deux modes de flexion respectivement suivant deux axes de propagation (X, Y) rectilignes différents, et caractérisés par des fréquences de résonance ($f_X$, $f_Y$) différentes, ce qui permet d'obtenir une interface tactile 2D. Ces deux axes de propagation (X, Y) ne sont pas nécessairement orthogonaux. Dans une autre variante de réalisation, la structure vibrante 2 pourrait néanmoins ne pas être dissymétrique selon les deux axes X, Y (par exemple structure de forme carrée), et posséder dans ce cas deux modes propres de flexion identiques selon les deux axes de propagation X et Y (fréquences de résonance $f_X$ et $f_Y$ identiques).

Les céramiques piézoélectriques polarisées 210 ne sont pas nécessairement collées à la plaque 20, mais sont fixées par tout moyen approprié, et peuvent par exemple être soudées à la plaque 20. La couche piézoélectrique 21 n'est pas nécessairement constituée d'une matrice de céramiques individuelles, ladite matrice pouvant être remplacée par toute couche de matériau piézoélectrique équivalente, remplissant la même fonction.

Applications

L'interface tactile de l'invention peut être utilisée dans de nombreux domaines différents et dans toutes les applications où il est utile de reproduire tactilement des textures ou rugosités très fines.

De manière non limitative et non exhaustive, cette interface trouve par exemple son application dans les différents domaines suivants. Dans le domaine de la réalité virtuelle, elle peut être utilisée comme périphérique informatique pour simuler des textures d'objet très fines ; par exemple en CAO/DOA, elle peut être utilisée dans l'aide à la conception d'habillage intérieur de voiture ; dans la vente à distance, elle peut être utilisée pour faire tester par un client le toucher réel d'articles (tissus de revêtement, cuirs, mobilier, etc...) ; dans les jeux vidéos, elle peut être utilisée comme interface tactile pour augmenter les sensations du joueur. Dans le domaine médical, l'interface tactile peut être utilisée comme aide à la navigation ou à la perception environnementale de personnes visuellement déficientes.

**Revendications**

1. Interface tactile (1) comportant une surface de contact vibrante et des moyens de mise en vibration qui sont adaptés pour générer une déformation mécanique vibratoire de ladite surface de contact, de manière à générer un effet « Squeeze film » et modifier la sensation tactile de toucher de la surface de contact **caractérisée en ce qu'**elle comporte :

    - une structure vibrante (2) comprenant une plaque (20) dont l'une (20a) des faces forme ladite surface de contact vibrante de l'interface, et une couche piézoélectrique (21) fixée contre l'autre face de ladite plaque, ladite structure présentant au moins un mode de flexion **caractérisé par** une fréquence de résonance qui est comprise entre 10kHz et 100kHz,
    - des moyens d'alimentation électrique (AL) qui sont connectés à la couche piézoélectrique (21),

    et en ce que la couche piézoélectrique (21) et les moyens d'alimentation électrique (AL) sont adaptés pour exciter ledit mode de flexion de la structure vibrante (2) et générer dans la structure vibrante (2) des ondes de Lamb stationnaires ayant une direction de propagation suivant au moins un axe rectiligne de propagation.

2. Interface tactile selon la revendication 1, **caractérisée en ce que** la structure vibrante (2) comporte deux modes de flexion **caractérisés par** des fréquences de résonance ($f_X$, $f_Y$) différentes, et en ce que la couche piézoélectrique (21) et les moyens d'alimentation électrique (AL) sont adaptés pour exciter l'un ou l'autre des deux modes de flexion et générer dans la structure vibrante (2) des ondes de Lamb stationnaires ayant une direction de propagation suivant un premier (X) ou un deuxième (Y) axe rectiligne de propagation.

3. Interface tactile selon la revendication 2, **caractérisée en ce que** les deux axes de propagation (X,Y) des ondes de Lamb stationnaires sont orthogonaux.

4. Interface tactile selon la revendication 3, **caractérisée en ce que** la plaque (20) est rectangulaire.

5. Interface tactile selon l'une des revendications 2 à 4, **caractérisée en ce que** la couche piézoélectrique (21) est alimentée par deux signaux électriques ($V_a$, $V_b$) qui sont délivrés par les moyens d'alimentation électrique (AL), et qui permettent la sélection du mode de flexion suivant l'un ou l'autre des axes de propagation (X ou Y) par modification de la fréquence des deux signaux ($V_a$, $V_b$) et du déphasage des deux signaux ($V_a$, $V_b$).

6. Interface tactile selon l'une des revendications 1 à 5, **caractérisée en ce que** la couche piézoélectrique (21) comporte une matrice de céramiques piézoélectriques (210).

7. Interface tactile selon la revendication 6 et l'une des revendications 2 à 5, **caractérisée en ce que** les céramiques piézoélectriques (210) sont alignées selon les deux axes rectilignes de propagation (X et Y) de la structure vibrante (2).

8. Interface tactile selon la revendication 7, **caractérisée en ce que** les céramiques piézoélectriques (210) sont polarisées, et **en ce que** les céramiques piézoélectriques (210) alignées suivant l'un (Y) des axes de propagation présentent la même polarisation, et **en ce que** les céramiques piézoélectriques (210) alignées suivant l'autre axe de propagation (X) présentent des polarisations alternées.

9. Interface tactile selon l'une des revendications 1 à 8, **caractérisée en ce que** la plaque (20) est en Cuivre Béryllium

10. Interface tactile selon l'une des revendications 1 à 9, **caractérisée en ce qu'**elle permet de générer un effet « Squeeze film » à la surface de contact vibratoire (20a) de la plaque 20 avec un paramètre σ supérieur ou égal à 10, le paramètre σ étant calculé au moyen de la formule suivante :

$$\sigma = (12\mu\omega/Pa).(lc/h)^2,$$

avec :

$\mu$: la viscosité dynamique de l'air à 20°C et 1 bar (1,85 10$^{-5}$ Pa.s)
$\omega$: la pulsation de la vibration (rad.s$^{-1}$)
Pa : la pression ambiante (10$^5$ Pascals)

$$h=h_{vib}+he+hr$$

$h_{vib}$ : l'amplitude de la vibration de la surface de contact ($\mu$m)
lc : longueur au contact du doigt (10$^4$ $\mu$m)
he : amplitude de l'ondulation des empreintes du doigt (50$\mu$m) hr :la rugosité de la surface de contact vibrante ($\mu$m)

**11.** Interface tactile selon l'une des revendications 1 à 10, **caractérisée en ce que** la fréquence de résonance ($f_X$, ou $f_Y$) du mode de flexion de la structure (2) selon l'axe de propagation (X, Y) est comprise entre 20kHz et 100kHz.

**12.** Interface tactile selon l'une des revendications 1 à 11, **caractérisée en ce que** la plaque (20), la couche piézoélectrique (21) et les moyens d'alimentation électrique (AL) sont adaptés pour obtenir une déformée de la surface de contact (20a) avec une amplitude crête à crête supérieure ou égale à 0,2$\mu$m.

**13.** Interface tactile selon la revendication 12, **caractérisée en ce que** la plaque (20), la couche piézoélectrique (21) et les moyens d'alimentation électrique (AL) sont adaptés pour obtenir une déformée de la surface de contact (20a), avec une amplitude crête à crête supérieure ou égale à 1$\mu$m.

**14.** Interface tactile selon l'une des revendications 1 à 13, **caractérisée en ce qu'**elle comporte un capteur (3) permettant de mesurer le déplacement du doigt d'un utilisateur au contact de la surface vibrante (20a) de la plaque (20), et des moyens (4 ; 5) de modulation de l'amplitude de vibration de la surface vibrante (20a) en fonction du signal de mesure (3a) délivré par ce capteur (3).

**15.** Interface tactile selon l'une des revendications 1 à 14, **caractérisée en ce que** la couche piézoélectrique (21) est conçue pour se contracter et se dilater alternativement dans un plan parallèle à la plaque (20) sous l'action des moyens d'alimentation électriques (AL).

**Patentansprüche**

**1.** Berührungsempfindliche Schnittstelle (1) mit einer vibrierenden Kontaktfläche und Vibrationsmitteln, die dazu geeignet sind, eine mechanische Vibrationsverformung der Kontaktfläche zu erzeugen, so dass ein "Squeeze Film"-Effekt erzeugt wird und die Tastempfindung beim Berühren der Kontaktfläche verändert wird, **dadurch gekennzeichnet, dass** sie enthält

- eine Vibrationsstruktur (2) mit einer Platte (20), bei welcher eine der Seiten (20a) die vibrierende Kontaktfläche der Schnittstelle bildet, und mit einer piezoelektrischen Schicht (21), die auf der anderen Seite der Platte fixiert ist, wobei die Struktur zumindest einen Biegemodus aufweist, der durch eine Resonanzfrequenz zwischen 10 kHz und 100 kHz gekennzeichnet ist,
- elektrische Versorgungsmittel (AL), die an die piezoelektrische Schicht (21) angeschlossen sind,

und dadurch, dass die piezoelektrische Schicht (21) und die elektrischen Versorgungsmittel (AL) dazu geeignet sind, den Biegemodus der Vibrationsstruktur (2) hervorzurufen und in der Vibrationsstruktur (2) stehende Lamb-Wellen mit einer Ausbreitungsrichtung entlang zumindest einer geradlinigen Ausbreitungsachse zu erzeugen.

**2.** Berührungsempfindliche Schnittstelle nach Anspruch 1, **dadurch gekennzeichnet, dass** die Vibrationsstruktur (2) zwei Biegemodi aufweist, die durch unterschiedliche Resonanzfrequenzen ($f_X$, $f_Y$) gekennzeichnet sind, und dass die piezoelektrische Schicht (21) und die elektrischen Versorgungsmittel (AL) dazu geeignet sind, den einen oder anderen der beiden Biegemodi hervorzurufen und in der Vibrationsstruktur (2) stehende Lamb-Wellen mit einer Ausbreitungsrichtung entlang einer ersten (X) oder einer zweiten (Y) geradlinigen Ausbreitungsachse zu erzeugen.

**3.** Berührungsempfindliche Schnittstelle nach Anspruch 2, **dadurch gekennzeichnet, dass** die beiden Ausbreitungsachsen (X, Y) der stehenden Lamb-Wellen orthogonal verlaufen.

**4.** Berührungsempfindliche Schnittstelle nach Anspruch 3, **dadurch gekennzeichnet, dass** die Platte (20) rechteckförmig ist.

**5.** Berührungsempfindliche Schnittstelle nach einem der Ansprüche 2 bis 4, **dadurch gekennzeichnet, dass** der piezoelektrischen Schicht (21) zwei elektrische Signale ($V_a$,$V_b$) zugeführt werden, die von den elektrischen Versorgungsmitteln (AL) ausgegeben werden und die Auswahl des Biegemodus entlang der einen oder anderen der Ausbreitungsachsen (X oder Y) durch Änderung der Frequenz der

beiden Signale ($V_a$, $V_b$) und der Phasenverschiebung der beiden Signale ($V_a$, $V_b$) gestatten.

6. Berührungsempfindliche Schnittstelle nach einem der Ansprüche 1 bis 5, **dadurch gekennzeichnet, dass** die piezoelektrische Schicht (21) eine Matrix aus piezoelektrischen Keramiken (210) aufweist.

7. Berührungsempfindliche Schnittstelle nach Anspruch 6 und einem der Ansprüche 2 bis 5, **dadurch gekennzeichnet, dass** die piezoelektrischen Keramiken (210) entlang der beiden geradlinigen Ausbreitungsachsen (X und Y) der Vibrationsstruktur (2) ausgerichtet sind.

8. Berührungsempfindliche Schnittstelle nach Anspruch 7, **dadurch gekennzeichnet, dass** die piezoelektrischen Keramiken (210) polarisiert sind und dass die piezoelektrischen Keramiken (210), die entlang der einen (Y) Ausbreitungsachse ausgerichtet sind, die gleiche Polarisierung aufweisen und dass die piezoelektrischen Keramiken (210), die entlang der anderen Ausbreitungsachse (X) ausgerichtet sind, wechselnde Polarisierungen aufweisen.

9. Berührungsempfindliche Schnittstelle nach einem der Ansprüche 1 bis 8, **dadurch gekennzeichnet, dass** die Platte (20) aus Berylliumkupfer besteht.

10. Berührungsempfindliche Schnittstelle nach einem der Ansprüche 1 bis 9, **dadurch gekennzeichnet, dass** sie gestattet, einen "Squeeze Film"-Effekt an der vibrierenden Kontaktfläche (20a) der Platte (20) mit einem Parameter σ größer oder gleich 10 zu erzeugen, wobei sich der Parameter σ nach der folgenden Formel errechnet:

$$\sigma = (12\mu\omega/Pa) * (Ic/h)^2$$

worin:

    μ die dynamische Viskosität von Luft bei 20°C und 1 bar ($1{,}85*10^{-5}$ Pa*s),
    ω die Kreisfrequenz der Vibration ($rad*s^{-1}$),
    Pa der Umgebungsdruck ($10^5$ Pascal),

$$h = h_{vib} + he + hr,$$

    $h_{vib}$ die Schwingungsamplitude der Kontaktfläche (μm),
    lc die Fingerkontaktlänge (104 μm),
    he die Amplitude der Welligkeit der Fingerabdrücke (50 μm),
    hr die Rauheit der vibrierenden Kontaktfläche (μm).

11. Berührungsempfindliche Schnittstelle nach einem der Ansprüche 1 bis 10, **dadurch gekennzeichnet, dass** die Resonanzfrequenz ($f_x$ oder $f_y$) des Biegemodus der Struktur (2) entlang der Ausbreitungsachse (X, Y) zwischen 20 kHz und 100 kHz beträgt.

12. Berührungsempfindliche Schnittstelle nach einem der Ansprüche 1 bis 11, **dadurch gekennzeichnet, dass** die Platte (20), die piezoelektrische Schicht (21) und die elektrischen Versorgungsmittel (AL) dazu geeignet sind, eine Biegelinie der Kontaktfläche (20a) mit einer Amplitude von Spitze zu Spitze zu erhalten, die größer oder gleich 0,2 μm ist.

13. Berührungsempfindliche Schnittstelle nach Anspruch 12, **dadurch gekennzeichnet, dass** die Platte (20), die piezoelektrische Schicht (21) und die elektrischen Versorgungsmittel (AL) dazu geeignet sind, eine Biegelinie der Kontaktfläche (20a) mit einer Amplitude von Spitze zu Spitze zu erhalten, die größer oder gleich 1 μm ist.

14. Berührungsempfindliche Schnittstelle nach einem der Ansprüche 1 bis 13, **dadurch gekennzeichnet, dass** sie einen Sensor (3) aufweist, mit dem die Verlagerung des Fingers eines Benutzers bei Berührung der vibrierenden Fläche (20a) der Platte (20) gemessen werden kann, sowie Mittel (4;5) zur Modulation der Schwingungsamplitude der vibrierenden Fläche (20a) in Abhängigkeit von dem von diesem Sensor (3) ausgegebenen Messsignal (3a).

15. Berührungsempfindliche Schnittstelle nach einem der Ansprüche 1 bis 14, **dadurch gekennzeichnet, dass** die piezoelektrische Schicht (21) dazu ausgelegt ist, sich in einer parallel zur Platte (20) verlaufenden Ebene unter der Wirkung der elektrischen Versorgungsmittel (AL) wechselweise zusammenzuziehen und auszudehnen.

**Claims**

1. A tactile interface (1) including one vibrating contact surface and vibration means suited to generate a vibratory mechanical deformation of said contact surface, so as to generate a « squeeze film » effect and modify the tactile sensation of touching the contact surface, **characterised in that** it includes:

    - a vibrating structure (2) comprising a plate (20), one (20a) of the faces of which forms said vibrating contact surface of the interface, and a piezoelectric layer (21) affixed to the other face of the plate, said structure having at least one flexural mode **characterised by** a resonance frequency which is comprised between 10 kHz and 100 kHz,

- electrical power supply means (AL) which are connected to the piezoelectric layer (21),

and in that the piezoelectric layer (21) and the electrical power supply means (AL) are suited to excite said flexural mode of the vibrating structure (2) and generate in the vibrating structure (2) stationary Lamb waves having a propagation direction following at least one rectilinear propagation axis.

2. The tactile interface according to claim 1, **characterised in that** the vibrating structure (2) includes two flexural modes **characterised by** different resonance frequencies ($f_x$, $f_y$), and in that the piezoelectric layer (21) and the electrical power supply means (AL) are suited to excite either one of the two flexural modes and generate in the vibrating structure (2) stationary Lamb waves having a propagation direction along a first (X) and a second (Y) rectilinear propagation axis.

3. The tactile interface according to claim 2, **characterised in that** the two propagation axes (X, Y) of the stationary Lamb waves are orthogonal.

4. The tactile interface according to claim 3, **characterised in that** the plate (20) is rectangular.

5. The tactile interface according to any of claims 2 to 4, **characterised in that** the piezoelectric layer (21) is fed by two electrical signals ($V_a$, $V_b$) which are delivered by the electrical power supply means (AL), and which allow selection of the flexural mode along either one of the propagation axes (X or Y) by modifying the frequency of both signals ($V_a$, $V_b$) and the phase shift of both signals ($V_a$, Vb).

6. The tactile interface according to any of claims 1 to 5, **characterised in that** the piezoelectric layer (21) includes a matrix of piezoelectric ceramics (210).

7. The tactile interface according to claim 6 and to any of claims 2 to 5, **characterised in that** the piezoelectric ceramics (210) are aligned along the two rectilinear propagation axes (X and Y) of the vibrating structure (2).

8. The tactile interface according to claim 7, **characterised in that** the piezoelectric ceramics (210) are polarised, and **in that** the piezoelectric ceramics (210) aligned along one (Y) of the propagation axes have the same polarisation, and **in that** the piezoelectric ceramics (210) aligned along the other propagation axis (X) have alternate polarisations.

9. The tactile interface according to any of claims 1 to 8, **characterised in that** the plate (20) is made in copper-beryllium.

10. The tactile interface according to any of claims 1 to 9, **characterised in that** it allows generation of a « squeeze film » effect on the vibrating contact surface (20a) of the plate 20 with a parameter σ greater than or equal to 10, the parameter σ being calculated by means of the following formula:

$$\sigma = (12\mu\omega/Pa).(Ic/h)^2,$$

wherein:

μ: dynamic viscosity of the air at 20 °C and 1 bar ($1.85 \times 10^{-5}$ Pa.s)
ω: angular frequency of the vibration (rad.$s^{-1}$)
Pa: ambient pressure ($10^5$ pascals)

$$h = h_{vib} + he + hr$$

$h_{vib}$: amplitude of the vibration of the contact surface (μm)
lc: length in contact with the finger ($10^4$ μm)
he: amplitude of the ripple of the fingerprints (50μm)
hr: roughness of the vibrating contact surface (μm)

11. The tactile interface according to any of claims 1 to 10, **characterised in that** the resonance frequency ($f_x$, or $f_y$) of the flexural mode of the structure (2) along the propagation axis (X, Y) is comprised between 20 kHz and 100 kHz.

12. The tactile interface according to any of claims 1 to 11, **characterised in that** the plate (20), the piezoelectric layer (21), and the electrical power supply means (AL) are suited to obtain a deformation of the contact surface (20a) having a peak-to-peak amplitude greater than or equal to 0.2 μm.

13. The tactile interface according to claim 12, **characterised in that** the plate (20), the piezoelectric layer (21), and the electrical power supply means (AL) are suited to obtain a deformation of the contact surface (20a) having a peak-to-peak amplitude greater than or equal to 1 μm.

14. The tactile interface according to any of claims 1 to 13, **characterised in that** it includes a sensor (3) allowing measurement of the movement of the finger of a user in contact with the vibrating surface (20a) of the plate (20), and means (4; 5) for modulation of the vibration amplitude of the vibrating surface (20a) depending on the measurement signal (3a) delivered by the sensor (3).

**15.** The tactile interface according to any of claims 1 to 14, **characterised in that** the piezoelectric layer (21) is designed to contract and dilate in an alternating fashion on a plane parallel to the plate (20) under the effects of the electrical power supply means (AL).

Fig.1

Fig.2

EP 1 956 466 B1

Fig.3

EP 1 956 466 B1

Fig.4

Fig.5

Fig.6

Fig.7

Fig.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MASAYA TAKASAKI et al.** wo-dimensial Active Surface Acoustic Wave Tactile Display On a Computer Screen. *Symposium on Haptic Interfaces for Virtual Environment and Teleoperator Systems,* 25 Mars 2006, 49-54
- **M. WIESENDANGER.** Squeeze film air bearings using piezoelectric bending elements. *PhD Dissertation, EPFL, Suisse,* 2000

- **T. WATANABE ; A. FUKUI.** A Method for Controlling Tactile Sensation of Surface Roughness Using Ultrasonic Vibration. *IEEE Conference on robotics and automation,* 1995, 1134-1139
- **MELISANDE BIET ; FRÉDÉRIC GIRAUD ; FRANÇOIS MARTINOT ; BETTY SEMAIL.** A Piezoelectric Display Using Travelling Lamb Wave. *Proceedings of Eurohaptics,* Juillet 2006, 567-570